# EUROPEAN PATENT SPECIFICATION

(11) **EP 1 840 814 B1**
(45) Date of publication and mention of the grant of the patent: **03.07.2013**
(21) Application number: 07004810.3
(22) Date of filing: 08.03.2007
(51) Int. Cl.: G06Q 20/00

(54) **Verification system**
Prüfsystem
Système de vérification

(30) Priority: 17.03.2006 JP 2006073761
(43) Date of publication of application: 03.10.2007
(73) Proprietor: Hitachi Solutions, Ltd., Tokyo 140-0002 (JP)
(72) Inventor: Ishida, Natsuki, c/o Hitachi Software Engineering Co., Ltd., Tokyo 140-0002 (JP)
(74) Representative: Liesegang, Roland

(56) References cited:
- WO-A-02/23303
- WO-A-02/48846
- WO-A-95/19593
- WO-A-03/012755
- WO-A-2005/022474
- GB-A- 2 328 310
- US-A1- 2002 059 146
- US-A1- 2005 015 588
- US-B1- 6 731 731

## Description

### BACKGROUND OF THE INVENTION

### 1. Field of the Invention

The present invention relates to a verification system and more particularly to a verification system suitable for the verification of clients (users) and contents (e.g., transaction contents) of online service, such as Web shopping, provided by an online service server to a client terminal via a network such as the Internet.

### 2. Background Art

When an online service server provides online services such as Web shopping to client terminals via a network such as the Internet, it is necessary to verify that the client who requested such service is an authorized client registered in the online service server in advance, in order to prevent unlawful transaction.

As a relevant technology to verify the client, a verification system is known in which the client is verified using a fixed password that is set for the client in advance.

In such verification system based on the fixed password, there is the problem that the fixed password, which is not frequently changed, could be unlawfully reused once leaked through a key logger or the like.

As a technology to address such potential danger in verifying the client in a client/server system, a verification system is known in which a onetime password is utilized.

One type of verification system utilizing the onetime password is disclosed in JP Patent Publication (Kokai) No. 2002-259344 A , in which the onetime password is synchronized with the current time. In this system, the client terminal and the online service server independently compute onetime passwords based on client ID (online service user ID), a fixed password, and the current time, using a secure hash function. The client is verified using the thus computed onetime passwords.

In such verification system, since the onetime password is frequently changed depending on time, the chances of the onetime password being reused once leaked through a key logger or the like can be reused.
US patent application 2002/0059146 Al discloses a method and system for secure identification of a person in an electronic communication environment, wherein a user is issued with a user code known only to the user and stored in the host computer. When the user is required to identify themselves to the host computer, the host computer generates a pseudo-random security string and applies the user code to the pseudo-random security string to generate a transaction code. The host computer transmits the pseudo-random security string to a portable terminal device operated by the user, who applies the known user code to determine a transaction code.
US patent 6,731,731 B1 discloses a verification system for secure identification of a person in an electronic communications environment in which a telephone number of a telephone of the user is registered prior to the authentication, and the user calls an identification server by the use of the telephone so that the identification server may authenticate the user with reference to the telephone number of the call received. The password is then generated by the identification server and is transmitted to both the user and the service provider.

### SUMMARY OF THE INVENTION

The above conventional verification system utilizing onetime password as described above has the following problems.

In a first problem, the system does not distinguish between the onetime password for client verification upon login to the online service server and the onetime password for transaction contents verification for verifying the provided online service contents (transaction contents). Therefore, if the onetime password for client verification should be leaked by spyware or the like on a real-time basis, the leaked client-verifying onetime password could be unlawfully used by a third party with malicious intent for unlawful acts, such as tampering with transaction contents.

In a second problem, because the onetime password that is entered in the online service client consists of not more than several digits of characters for the sake of user convenience, the onetime password is weak, and a stronger onetime password having greater number of characters cannot be easily entered.

It is therefore a first object of the invention to provide a verification system in which the client terminal can safely receive online service from an online service server.

It is a second object of the invention to provide a verification system in which a onetime password having a large number of characters and therefore greater strength can be easily entered.

In order to achieve the aforementioned objects, the invention provides a verification system which comprises: an online service server for providing online service; an information terminal device for receiving online service; a onetime password server for carrying out a process relating to the verification of login of the information terminal device onto the online service server and the verification of transaction contents of online service; and a portable terminal device owned by the user of the information terminal device who receives online service, the portable terminal device being used for displaying an onetime password used for login verification and transaction contents verification.

The onetime password server carries out login verification for online service and verification of transaction contents concerning online service using onetime passwords received from the information terminal device.

The information terminal device comprises: means for transmitting a login verification screen acquisition request to the online service server, receiving a login verification screen including a challenge generated by the onetime password server in accordance with an instruction from the online service server to the onetime password server, displaying the received login verification screen, transmitting the received challenge to the portable terminal device, and receiving a login-verifying onetime password from the portable terminal device that is generated using the challenge as a factor; means for transmitting a transaction verification screen acquisition request including transaction contents to the online service server, receiving a transaction verification screen to which transaction preparation information and the transaction contents are added, wherein the transaction preparation information contains a set of a transaction-contents-verifying onetime password and the transaction contents that has been encoded by a common key shared by the onetime password server and the portable terminal device, the transaction-contents-verifying onetime password being generated by the onetime password server in accordance with an instruction from the online service server to the onetime password server, and displaying the transaction verification screen; and means for transmitting the transaction preparation information to the portable terminal device, and receiving the transaction-contents-verifying onetime password that is extracted by decoding the transaction preparation information in the portable terminal device using the common key shared with the onetime password server.
In another aspect, the invention provides a verification system which comprises: an online service server for providing online service; an information terminal device for receiving online service; a onetime password server for carrying out a process relating to the verification of login of the information terminal device onto the online service server and the verification of transaction contents of online service; and a portable terminal device owned by the user of the information terminal device who receives online service, the portable terminal device being used for displaying onetime passwords used for login verification and transaction contents verification.
The onetime password server carries out login verification for online service and verification of transaction contents concerning online service using onetime passwords received from the information terminal device.
The information terminal device comprises: means for transmitting a login verification screen acquisition request to the online service server, receiving a login verification screen to which a challenge and a two-dimensional code of the challenge are added, the challenge being generated by the onetime password server in accordance with an instruction from the online service server to the onetime password server, and displaying the received login verification screen; and means for transmitting a transaction verification screen acquisition request including transaction contents to the online service server, receiving a transaction verification screen to which transaction preparation information and a two-dimensional code of the transaction preparation information are added, wherein the transaction preparation information contains a set of a transaction-contents-verifying onetime password, and the transaction contents that has been encoded by a common key shared by the onetime password server and the portable terminal device, the transaction-contents-verifying onetime password being generated by the onetime password server in accordance with an instruction from the online service server to the onetime password server, and displaying the received transaction verification screen.

The portable terminal device comprises: means for restoring the challenge by decoding the two-dimensional code of the challenge displayed on a display screen of the information terminal device, and displaying a login-verifying onetime password generated using the challenge as a factor; and means for restoring the transaction preparation information by decoding the two-dimensional code of the transaction preparation information displayed on the display screen of the information terminal device, extracting the transaction-contents-verifying onetime password and transaction contents by decoding the transaction preparation information using the common key, and displaying the transaction-contents-verifying onetime password and transaction contents.

Preferably, the onetime password server comprises: means for receiving, from the information terminal device via the online service server, a login verification request including a login-verifying onetime password and a transaction verification request including a transaction-contents-verifying onetime password, and identifying the type of the received login-verifying onetime password and the transaction-contents-verifying onetime password based on the strength of the login-verifying onetime password and that of the transaction-contents-verifying onetime password.

Preferably, the information terminal device and the portable terminal device each comprise a wireless interface or an IC card interface for the transmission and reception of the challenge, login-verifying onetime password, transaction preparation information, and transaction-contents-verifying onetime password, using a wireless signal.

### Effects of the Invention

In accordance with the invention, the onetime password server transmits a login-verifying onetime password in response to the reception of a request therefor, while it transmits a onetime password for transaction contents verification in response to the reception of a request therefor. Alternatively, the information terminal device reads and decodes a two-dimensional code displayed on the portable terminal device, and then generates a login-verifying onetime password or a onetime password for transaction contents verification depending on the identifying bit sequence contained in the decoded information. Thus, the login-verifying onetime password and the onetime password for transaction contents verification are generated separately. As a result, it becomes possible to solve the first problem of the conventional verification system using onetime passwords, namely, the possibility of such onetime passwords being leaked in real-time through the use of spyware or the like and used for unlawful transaction verification purposes. Thus, the invention makes it possible to provide online service safely.
Furthermore, the onetime passwords required by the information terminal device for login verification and transaction contents verification are transmitted from the portable terminal device. In this way, it becomes possible to employ onetime passwords consisting of a large number of characters and thus having greater strength. Thus, the second problem of the conventional verification system using onetime passwords can be solved, and a highly safe online service can be provided.
By identifying the type of the onetime password contained in the verification request received by the onetime password server based on its strength, it becomes possible for the onetime password server to carry out the verification process depending on the type of the onetime password. For example, a type of onetime password to be acquired by the online service user can be selected depending on the radio condition of the portable terminal device, whether or not the portable terminal device includes an IC card or a wireless communication port, or whether or not the portable terminal device has a camera function, for example, and then the verification process can be carried out in accordance with the type.

### BRIEF DESCRIPTION OF THE DRAWINGS

Fig. 1 shows a configuration of the verification system of the invention.
Fig. 2 shows an example of the detailed configuration of an online service server and a onetime password server in the verification system of the invention.
Fig. 3 shows an example of the detailed configuration of an information terminal device and a portable terminal device in the verification system of the invention.
Fig. 4 shows an example of information stored in a database in the verification system of the invention.
Fig. 5 shows an example of a login verification screen display process in the verification system of the invention.
Fig. 6 shows an example of a login verification screen in the verification system of the invention.
Fig. 7 shows an example of a login OTP (download method) acquisition process in the verification system of the invention.
Fig. 8 shows an example of a login OTP (two-way communication method) acquisition process in the verification system of the invention.
Fig. 9 shows an example of a login OTP (one-way communication method) acquisition process in the verification system of the invention.
Fig. 10 shows an example of a login verification process in the verification system of the invention.
Fig. 11 shows an example of a transaction verification screen display process in the verification system of the invention.
Fig. 12 shows an example of a transaction verification screen in the verification system of the invention.
Fig. 13 shows an example of a transaction OTP (download method) acquisition process in the verification system of the invention.
Fig. 14 shows an example of a transaction OTP (two-way communication method) acquisition process in the verification system of the invention.
Fig. 15 shows an example of a transaction OTP (one-way communication method) acquisition process in the verification system of the invention.
Fig. 16 shows an example of a transaction verification process in the verification system of the invention.
Fig. 17 shows an outline of processes relating to transaction in the verification system of the invention.

### DESCRIPTION OF THE PREFERRED EMBODIMENT

In the following, an embodiment of the verification system of the invention will be described with reference to the drawings.

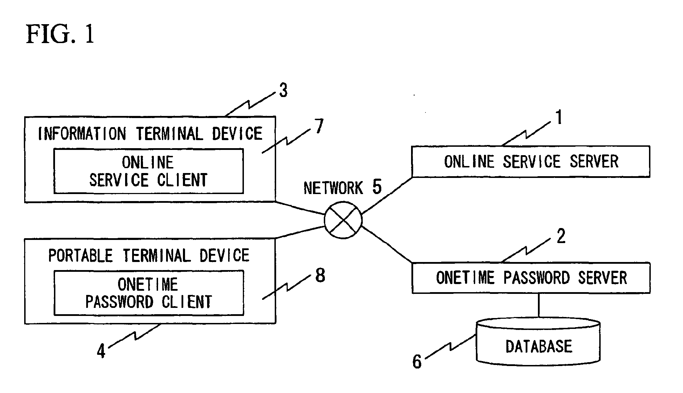

Fig. 1 shows an overall block diagram of a verification system according to an embodiment of the invention. The verification system includes: an online service server 1 for providing online service such as Web shopping; a onetime password server 2 for generating a onetime password for online service; an information terminal device 3 for receiving online service; and a portable terminal device 4 owned by the user of the information terminal device 3. These components of the system are connected via a network 5 such as the Internet.

To the onetime password server 2, a database 6 is connected in which information about the user who receives online service is stored, for example.

The online service server 1 corresponds to a Web server that provides online service such as Web shopping. The onetime password server 2 corresponds to a Web service server that generates a onetime password.

The information terminal device 3 consists of a personal computer or the like used by the user who receives online service. It implements an online service client 7.

The portable terminal device 4 consists of a cellular phone or the like owned by the user who receives online service. It implements a onetime password client 8.

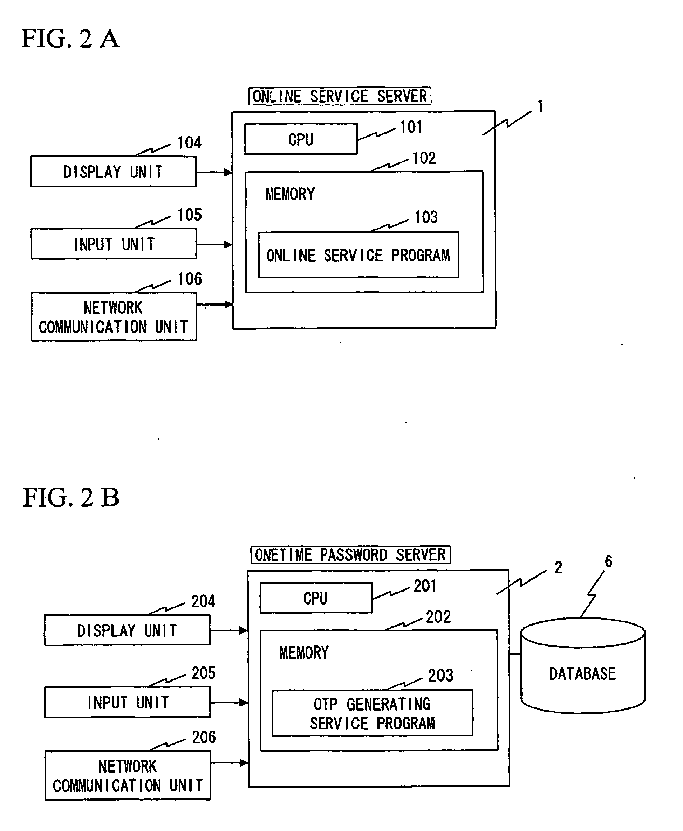

Fig. 2 shows a block diagram of the details of the online service server 1 and the onetime password server 2.

The online service server 1 includes a CPU 101 and a memory 102 in which an online service program 103 is stored. The online service server 1 also includes a display unit 104, an input unit 105, and a network communication unit 106.

The onetime password server 2 includes a CPU 201 and a memory 202 in which a onetime password generating service program 203 is stored.

The onetime password server 2 further includes a display unit 204, an input unit 205, and a network communication unit 206, and it can access a database 6.

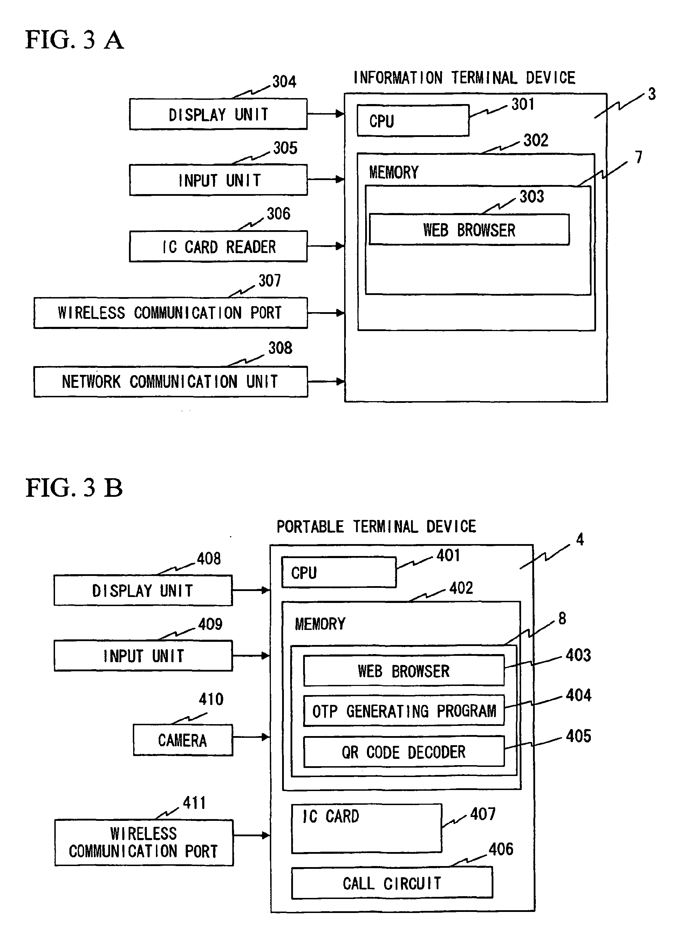

Fig. 3 shows a block diagram of the details of the information terminal device 3 and the portable terminal device 4.

The information terminal device 3 includes a CPU 301 and a memory 302 in which an online service client 7 that can receive online service is stored. The online service client 7 consists of a Web browser 303, for example. The information terminal device 3 also includes a display unit 304, an input unit 305, an IC card reader 306, a wireless communication port 307, and a network communication unit 308.

The portable terminal device 4 includes a CPU 401 and a memory 402 in which a onetime password client 8 is stored. The onetime password client 8 is composed of, e.g., a Web browser 403, a onetime password generating program 404, and a QR code decoder 405. The portable terminal device 4 further includes a call function unit such as a call circuit 406 necessary for a call, and an IC card 407 enabling transmission and reception of stored information to and from an external IC card reader using weak radio wave. The portable terminal device further includes a display unit 408, an input unit 409 such as a keypad, a camera 410, and a wireless communication port 411.

The IC card 407 stores a onetime password (to be hereinafter referred to as "OTP") generated by the onetime password generating program 404. The stored OTP is transferred to the information terminal device 3 by weak radio wave as the portable terminal device 4 is placed above a reading position of the IC card reader 306 of the information terminal device 3.

The camera 410 is used when reading a QR code (two-dimensional bar code) displayed on the display unit 304 of the information terminal device 3.

The wireless communication port 411 is used when transmitting the OTP generated by the OTP generating program 404 to the information terminal device 3 via the wireless communication port 307 of the information terminal device 3.

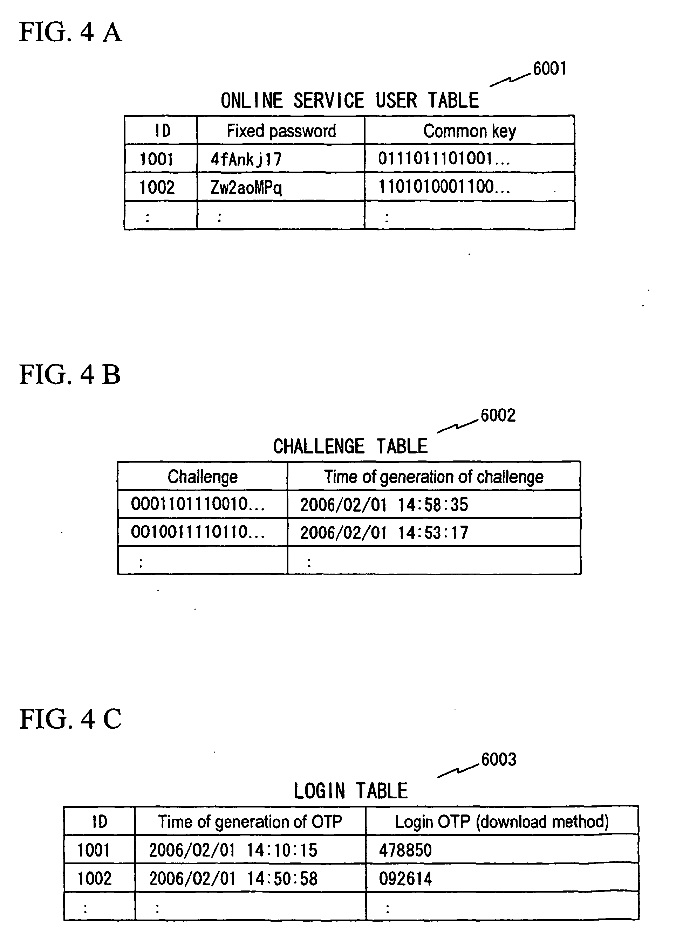

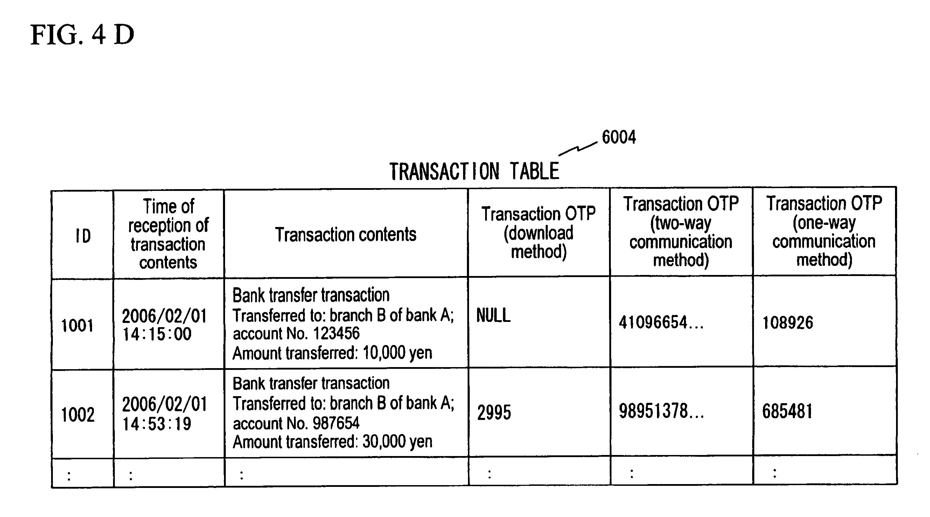

Fig. 4 shows examples of the information stored in the database 6, such as an online service user table 6001, a challenge table 6002, a login table 6003, and a transaction table 6004.

The online service user table 6001 stores user ID's, fixed passwords, and common keys.

The challenge table 6002 stores challenges generated by the onetime password server 2 and the time of generation.

The login table 6003 stores the time of generation of OTP's for login and the OTP's for login by user ID.

The OTP's for login refer to those OTP's for verification of the user who receives online service; they are OTP's for client verification. In the following, they are referred to as login OTP's

The transaction table 6004 stores the time of reception of transaction contents, transaction contents, and OTP's for transaction contents verification, by user ID.

The "OTP's for transaction contents verification" herein refer to those OTP's that vary depending on the provided online service contents (transaction contents). In the following they are referred to as transaction OTP's.

In accordance with the invention, there are three methods regarding the login OTP and transaction OTP In a download method, the OTP's are generated by the onetime password server 2 and the generated OTP's are downloaded to the portable terminal device 4. In a two-way communication method, the OTP's are generated in the portable terminal device 4 in accordance with an instruction from the information terminal device 3, and they are returned to the information terminal device 3 where they are used. In a one-way communication method, a QR code displayed on the information terminal device 3 is photographed with the camera in the portable terminal device 4 and decoded, and OTP's generated on the basis of the decoding result are displayed.

The download method is utilizable in an environment such that the portable terminal device 3 has good radio condition and can communicate with the onetime password server 2.

The two-way communication method is utilizable in an environment that permits the combination of the IC card 407 and the IC card reader 306 of the information terminal device 3, or the combination of the wireless communication port 411 of the portable terminal device 4 and the wireless communication port 307 of the information terminal device 3.

The two-way communication method allows the automatic entry of an OTP consisting of a large number of characters on the OTP input screen on the online service client's end. As a result, it becomes possible to enter an OTP with a high strength and carry out a safe and robust verification process.

The one-way communication method is utilizable in an environment where the portable terminal device 4 has a built-in camera available.

In the following, the types and features of OTP's used in the verification system of the invention will be described

The strengths are different among the login OTP (download method), the login OTP (two-way communication method), and the login OTP (one-way communication method).

The strengths are different among the transaction OTP (download method), the transaction OTP (two-way communication method), and the transaction OTP (one-way communication method).

That the strengths of OTP's are different means that the OTP's have different numbers of characters, for example.

Namely, when a login OTP (download method) consists of a number a of characters (such as six numerical characters), a login OTP (two-way communication method) consists of a number b of characters (such as 32 numerical characters), and a login OTP (one-way communication method) consists of a number c of characters (such as eight numerical characters), the values of *a, b,* and c are different

Further, when a transaction OTP (download method) consists of a number x of characters (such as four numerical characters), a transaction OTP (two-way communication method) consists of a number y of characters (such as 32 numerical characters), and a transaction OTP (one-way communication method) consists of a number z of characters (such as six numerical characters), the values of x, y, and z are different

It is noted that the passwords are not limited to sequences of numerical characters alone.

The initial status of the verification system of the invention will be described.

In the initial status, the database 6 has user ID's, fixed passwords, and common keys stored in the online service user table 6001, as shown in Fig. 4.

The portable terminal device 4 has stored the ID of the owner of the device corresponding to the online service user, and shared secret information. In the following, the shared secret information is described as consisting of a common key K that forms a pair with a fixed password.

Alternatively, the verification process and the OTP computing process using a fixed password and the encoding/decoding process and the MAC (Message Authentication Code) adding/verifying process using the common key cryptosystem can be performed using a public key encryption system.

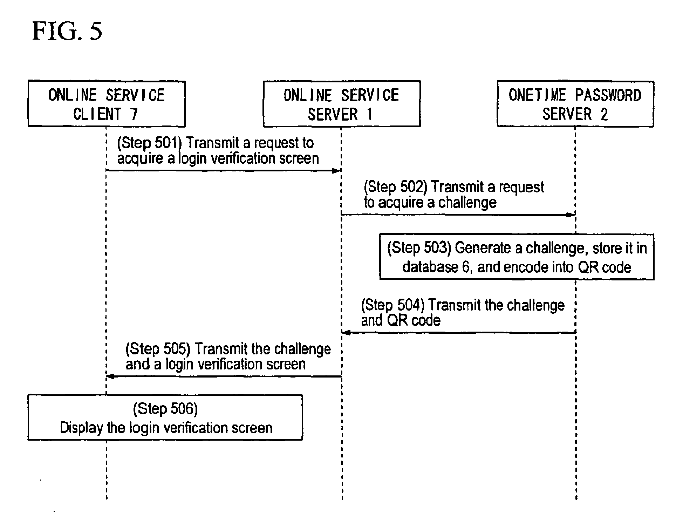

Of the processes performed by the verification system of the invention, an example of a login verification screen display process is described with reference to Fig. 5.

In step 501, the online service client 7 transmits a login verification screen acquisition request to the online service server 1.

In step 502, the online service server 1 transmits a challenge acquisition request to the onetime password server 2.

In step 503, the onetime password server 2 generates a challenge according to a challenge response system randomly, stores the challenge and the time of its generation in the challenge table 6002 in the database 6, and then encodes a combined bit sequence of a challenge identifying bit sequence and the challenge into a QR code.

In step 504, the onetime password server 2 transmits the challenge and the QR code to the online service server 1.

In step 505, the online service server 1 transmits the challenge and a login verification screen to the online service client 7.

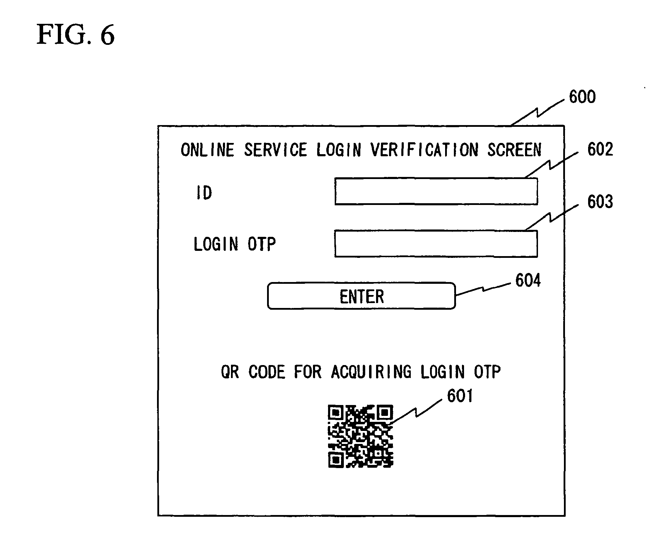

In step 506, the online service client 7 causes a login verification screen 600 to be displayed on the display unit 304 of the information terminal device 3, the screen consisting of a QR code 601 for the acquisition of a login OTP, an ID input field 602, a login OTP input field 603, and a login verification process enter button 604, as shown in Fig. 6.

The QR code 601 is read by the camera 410 in the portable terminal device 4 so as to generate a login OTP using a challenge contained in the QR code 601.

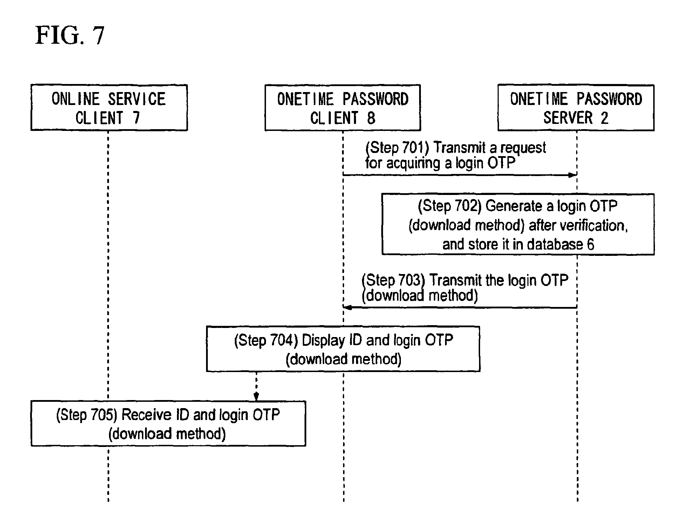

In the following, of the processes performed by the verification system of the invention, an example of a login OTP (download method) acquisition process is described with reference to Fig. 7.

In step 701, the onetime password client 8 transmits a login OTP acquisition request including a set of ID and a fixed password to the onetime password server 2.

In step 702, if the received set of ID and a fixed password is stored in the online service user table 6001 of the database 6, the onetime password server 2 generates a login OTP (download method) randomly and stores the ID, the time of generation of the OTP, and the login OTP (download method) in the login table 6003 of the database 6.

In step 703, the onetime password server 2 transmits the login OTP (download method) to the onetime password client 8.

In step 704, the onetime password client 8 causes the ID and login OTP (download method) to be displayed on the display unit 408 of the portable terminal device 4.

In step 705, the online service client 7 accepts the ID and the login OTP (download method) manually entered by the online service user on the login verification screen 600 shown in Fig. 6.

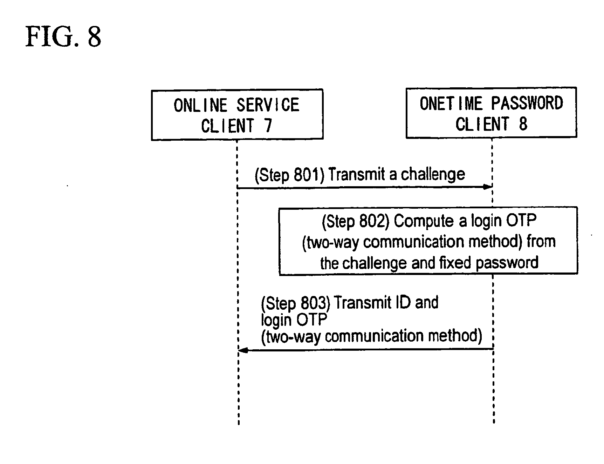

In the following, of the processes performed by the verification system of the invention, an example of a login OTP (two-way communication method) acquisition process is described with reference to Fig. 8.

The login OTP acquisition process in the present two-way communication method is carried out on the basis of the combination of the IC card 407 contained in the portable terminal device 4 and the IC card reader 306 of the information terminal device 3, or the combination of the wireless communication port 411 of the portable terminal device 4 and the wireless communication port 307 of the information terminal device 3.

In step 801, the online service client 7 transmits a challenge to the onetime password client 8. The challenge is the one that has been received from the onetime password server 2 in step 505 of Fig. 5 and then stored in the online service client 7.

In step 802, the onetime password client 8 computes a login OTP (two-way communication method) from the challenge and the fixed password.

For example, a secure hash value is calculated from the challenge and the fixed password using a secure hash function. Then, a character string consisting of a number b of numerical characters is calculated from the secure hash value using a hash function, and then used as a login OTP (two-way communication method).

In step 803, the onetime password client 8 transmits the ID and the login OTP (two-way communication method) to the online service client 7 using either the combination of the IC card 407 contained in the portable terminal device 4 and the IC card reader 306 of the information terminal device 3, or the combination of the wireless communication port 411 of the portable terminal device 4 and the wireless communication port 307 of the information terminal device 3.

The online service client 7 then causes the received ID and login OTP (two-way communication method) to be displayed on the login verification screen 600. In this case, the online service user does not need to manually enter the ID and login OTP (two-way communication method).

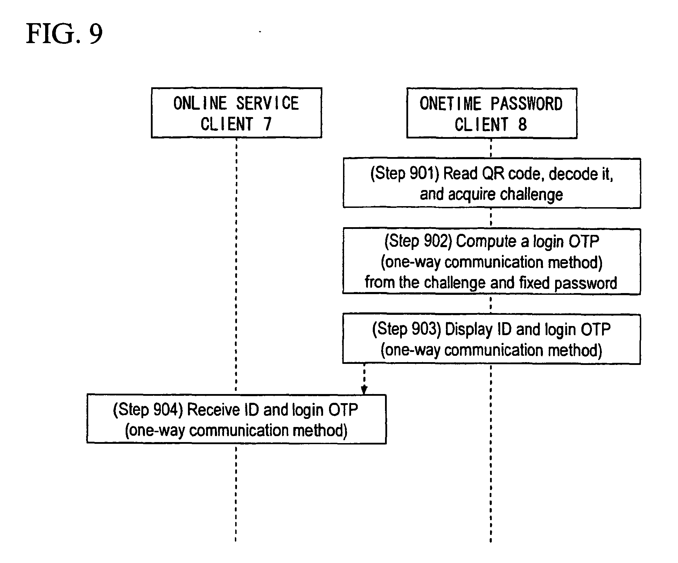

In the following, of the processes performed by the verification system of the invention, an example of a login OTP (one-way communication method) acquisition process is described with reference to Fig. 9.

In this login OTP acquisition process in the one-way communication method, the QR code displayed on the display unit 304 of the information terminal device 3 is photographed with the camera 410 built inside the portable terminal device 4, and then a login OTP is generated by decoding the QR code and displayed.

In step 901, the onetime password client 8 reads, using the camera 410, the QR code (601 of Fig. 6) displayed by the online service client 7. The client then decodes the QR code with the QR code decoder 405. If the initial bit sequence of the decoded information is identical to the challenge identifying bit sequence, the bit sequence of the decoded information subsequent to the challenge identifying bit sequence is considered to be a challenge and used in step 902 and the subsequent steps.

In step 902, the onetime password client 8 computes a login OTP (one-way communication method) from the challenge and the fixed password.

For example, a secure hash value is calculated from the challenge and the fixed password using a hash function, and then a character string consisting of a number c of numerical characters is calculated from the secure hash value using a hush function and used as a login OTP (one-way communication method).

In step 903, the onetime password client 8 displays the ID and the login OTP (one-way communication method).

In step 904, the online service client 7 accepts the ID and login OTP (one-way communication method) manually entered on the login verification screen 600 of Fig. 6 by the online service user.

Alternatively, it is also possible to have the ID and login OTP (one-way communication method) automatically entered on the login verification screen 600 using the combination of the IC card 407 contained in the portable terminal device 4 and the IC card reader 306 of the information terminal device 3, or the combination of the wireless communication port 411 of the portable terminal device 4 and the wireless communication port 307 of the information terminal device 3.

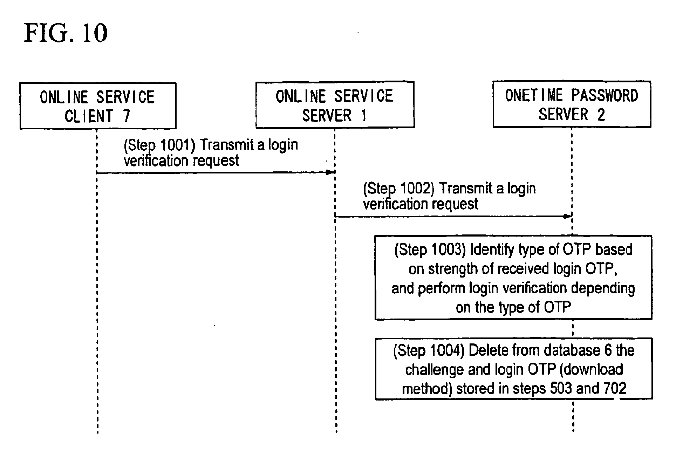

In the following, of the processes performed by the verification system of the invention, an example of a login verification process will be described with reference to Fig.10.

In step 1001, the online service client 7 transmits a login verification request to the online service server 1, the request including a set of the ID and login OTP entered via the login verification screen 600 and the challenge received from the online service server 1.

Step 1001 is carried out upon pressing of the login verification process enter button 604 by the online service user.

In step 1002, the online service server 1 transmits a login verification request to the onetime password server 2, the request including the set of ID, login OTP, and challenge.

In step 1003, the type of OTP is identified from the strength of the received login OTP, and then a login verification process is carried out depending on the type of the login OTP.

The "login verification process depending on the type of login OTP" means the following:
(a) Login verification is considered a success if the strength of the login OTP received by the onetime password server 2 is equal to the strength of the login OTP (download method), the set of the received ID and the login OTP is stored in the login table 6003 of the database 6, and the current time is within a certain duration of time from the time of generation of the OTP.
(b) Login verification is considered a success if the strength of the login OTP received by the onetime password server 2 is equal to the strength of the login OTP (two-way communication method), the received challenge is stored in the challenge table 6002 of the database 6, the current time is within a certain duration of time from the time of generation of the challenge, and the received login OTP is equal to a login OTP (two-way communication method) calculated from the challenge and a fixed password corresponding to the received ID, the fixed password being acquired from the online service user table 6001 of the database 6.

For example, a secure hash value is calculated from the challenge and the fixed password using a secure hash function, and then a character string consisting of a number b of numerical characters is calculated from the secure hash value using a hash function and used as a login OTP (two-way communication method).
(c) Login verification is considered a success if the strength of the login OTP received by the onetime password server 2 is equal to the strength of the login OTP (one-way communication method), the received challenge is stored in the challenge table 6002 of the database 6, the current time is within a certain duration of time from the time of generation of the challenge, and the received login OTP is equal to a login OTP (one-way communication method) calculated from the challenge and a fixed password corresponding to the received ID, the fixed password being acquired from the online service user table 6001 of the database 6.

For example, a secure hash value is calculated from the challenge and the fixed password using a secure hash function, and then a character string consisting of a number c of numerical characters is calculated from the secure hash value using a hash function and is used as a login OTP (one-way communication method).

In step 1004, the onetime password server 2 deletes records containing the received challenge from the challenge table 6002 of the database 6, and further deletes records containing the received ID from the login table 6003 of the database 6.

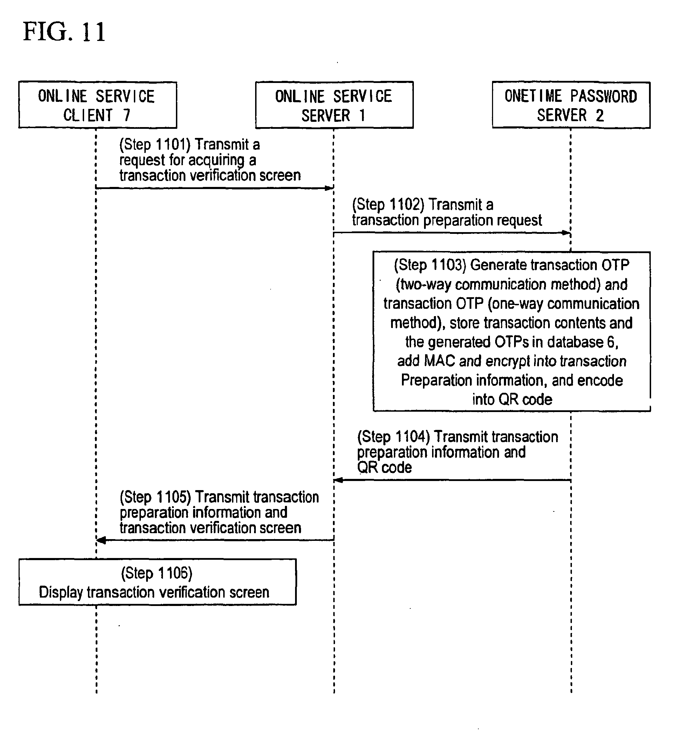

In the following, of the processes performed by the verification system of the invention, an example of a transaction verification screen display process is described with reference to Fig. 11.

In step 1101, the online service client 7 transmits a transaction verification screen acquisition request to the online service server 1, the request including a set of ID and transaction contents.

The transaction contents refer to information about the buying/selling of a product, bank transfer, and so on.

In step 1102, the online service server 1 transmits a transaction preparation request to the onetime password server 2, the request including the set of ID and transaction contents.

In step 1103, the onetime password server 2 sets the transaction OTP (download method) to a NULL value, randomly generates a transaction OTP (two-way communication method) and a transaction OTP (one-way communication method), and have the ID, transaction contents reception time, transaction contents, transaction OTP (download method), transaction OTP (two-way communication method), and transaction OTP (one-way communication method) stored in the transaction table 6004 of the database 6. The onetime password server 2 further acquires a common key K corresponding to the received ID from the online service user table 6001 of the database 6, adds a MAC, using the common key K, to the plain text consisting of the combined bit sequence of the transaction contents, the transaction OTP (two-way communication method), and the transaction OTP (one-way communication method). The MAC is generated by a MAC generating algorithm. The onetime password server 2 then encrypts the plain text with a common key cryptosystem and using the common key K. The onetime password server 2 then encodes the combined bit sequence of the transaction preparation information identifying bit sequence and the transaction preparation information into a QR code for the acquisition of a transaction OTP.

It is noted that the transaction preparation information identifying bit sequence is a bit sequence different from the challenge identifying bit sequence.

In step 1104, the onetime password server 2 transmits the transaction preparation information and the QR code to the online service server 1.

In step 1105, the online service server 1 transmits the transaction preparation information and a transaction verification screen to the online service client 7.

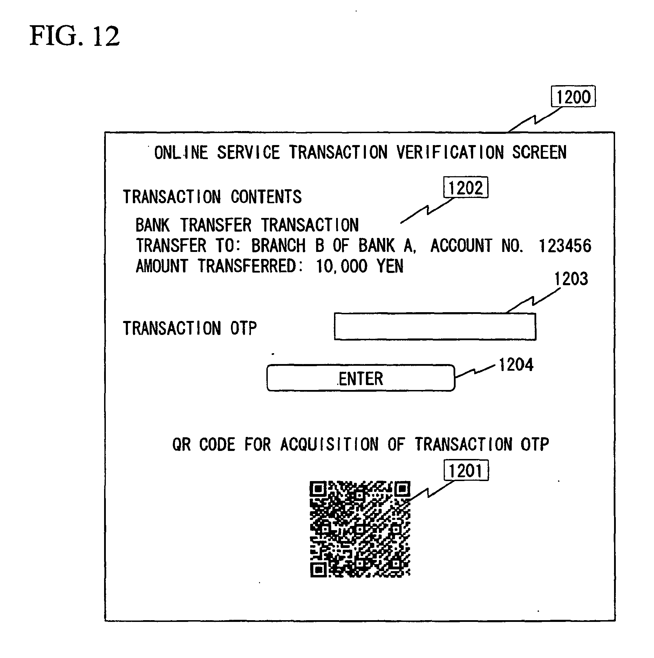

The transaction verification screen 1200 includes a QR code 1201, transaction contents 1202, a transaction OTP input field 1203, and a transaction verification process enter button 1204, as shown in Fig.12.

In step 1106, the online service client 7 displays the transaction verification screen 1200.

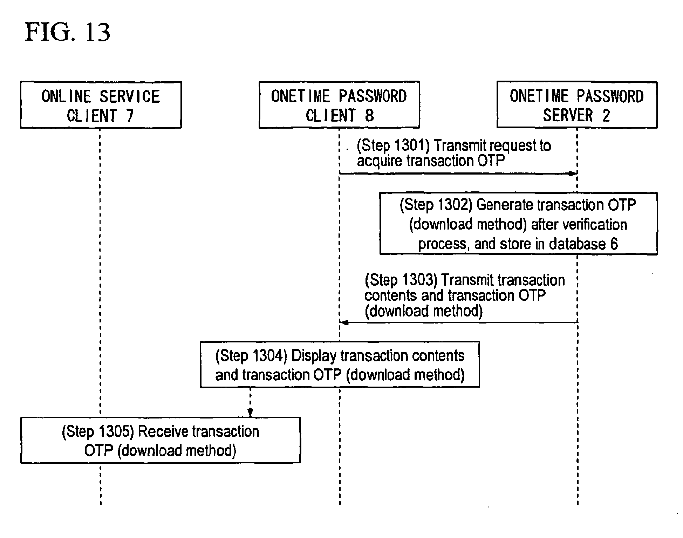

In the following, of the processes performed by the verification system of the invention, an example of a transaction OTP (download method) acquisition process is described with reference to Fig. 13.

In step 1301, the onetime password client 8 transmits a transaction OTP acquisition request to the onetime password server 2, the request including a set of ID and a fixed password.

In step 1302, if the received set of ID and the fixed password is stored in the online service user table 6001 of the database 6, the onetime password server 2 randomly generates a transaction OTP (download method), acquires transaction contents from a record stored in the transaction table 6004 of the database 6 having the received ID, and then stores the transaction OTP (download method).

In step 1303, the onetime password server 2 transmits the transaction contents and the transaction OTP (download method) to the onetime password client 8.

In step 1304, the onetime password client 8 causes the transaction contents and the transaction OTP (download method) to be displayed on the display unit 408.

In step 1305, the online service client 7 accepts the transaction OTP (download method) entered by the online service user on the transaction verification screen 1200.

It is noted that step 1305 is carried out upon confirmation by the online service user of the transaction contents displayed on the onetime password client 8.

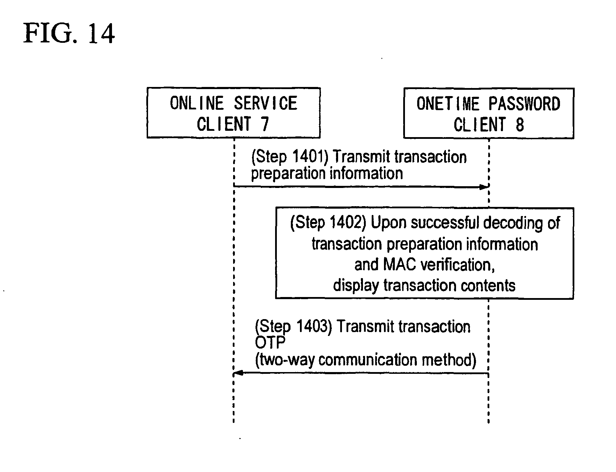

In the following, of the processes performed by the verification system of the invention, an example of a transaction OTP (two-way communication method) acquisition process will be described with reference to Fig. 14.

This transaction OTP acquisition process in the two-way communication method is carried out using the combination of the IC card 407 contained in the portable terminal device 4 and the IC card reader 306 of the information terminal device 3, or the combination of the wireless conununication port 411 of the portable terminal device 4 and the wireless communication port 307 of the information terminal device 3.

In step 1401, the online service client 7 transmits transaction preparation information to the onetime password client 8.

In step 1402, the onetime password client 8 displays the transaction contents if it succeeds in decoding the transaction preparation information with the common key K and using a common key cryptosystem and in MAC verification.

In step 1403, the onetime password client 8 transmits a transaction OTP (two-way communication method) to the online service client 7.

It is noted that step 1403 is initiated by bringing the IC card 407 contained in the portable terminal device 4 close to the IC card reader 306 of the information temiinal device 3, or by bringing the wireless communication port 411 of the portable terminal device 4 close to the wireless communication port 307 of the information terminal device 3, following the confirmation by the online service user of the transaction contents displayed on the onetime password client 8.

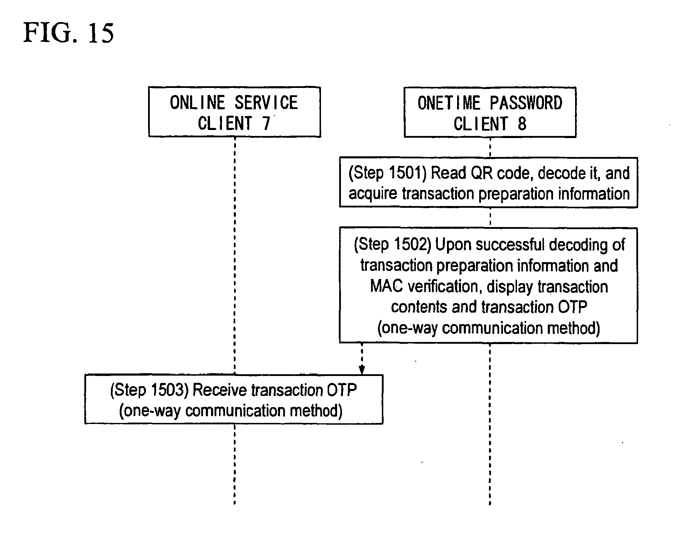

In the following, of the processes performed by the verification system of the invention, an example of a transaction OTP (one-way communication method) acquisition process will be described with reference to Fig. 15.

In this transaction OTP acquisition process in the one-way communication method, the QR code displayed on the display unit 304 of the information terminal device 3 is photographed by the camera 410 contained in the portable terminal device 4, and the QR code is decoded to generate an OTP, which is displayed.

In step 1501, the onetime password client 8 has the QR code 1201 displayed on the display unit 304 of the online service client 7 read by the camera 410 and decoded. If the initial bit sequence of the decoded information is identical to the transaction preparation information identifying bit sequence, the bit sequence of the decoded information subsequent to the transaction preparation information identifying bit sequence is used as transaction preparation information in step 1502 and the subsequent steps.

Alternatively, if the challenge and the transaction preparation information have different bit lengths, it is also possible to determine whether the information decoded in step 901 and step 1501 corresponds to a challenge or transaction preparation information based on the bit length.

In step 1502, if the onetime password client 8 succeeds in decoding the transaction preparation information and verifying the MAC, it causes the transaction contents and the transaction OTP (one-way communication method) to be displayed on the display unit 408.

In step 1503, the online service client 7 accepts the transaction OTP (one-way communication method) entered by the online service user on the transaction verification screen 1200.

It is noted that step 1503 is carried out upon confirmation by the online service user of the transaction contents displayed on the onetime password client 8.

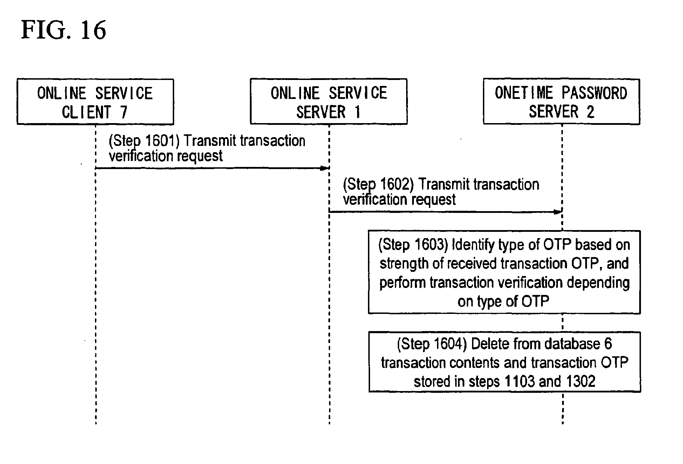

In the following, of the processes performed by the verification system of the invention, an example of a transaction verification process will be described with reference to Fig.16.

In step 1601, the online service client 7 transmits a transaction verification request to the online service server 1, the request including a set of ID, a transaction OTP, and transaction contents.

It is noted, however, that step 1601 is carried out upon pressing of the transaction verification process enter button 1204 by the online service user.

In step 1602, the online service server 1 transmits a transaction verification request to the onetime password server 2, the request including the set of ID, transaction OTP, and transaction contents.

In step 1603, the onetime password server 2 identifies the type of the OTP based on the strength of the received transaction OTP, and then carries out the transaction verification process depending on the type of the transaction OTP.

The "transaction verification process depending on the type of transaction OTP" means the following:
(a) Transaction verification is considered a success if the strength of the transaction OTP received by the onetime password server 2 is equal to the strength of the transaction OTP (download method), the received set of ID, transaction OTP (download method), and transaction contents is stored in the transaction table 6004 of the database 6, and the current time is within a certain duration of time from the transaction contents reception time.
(b) Transaction verification is considered a success if the strength of the transaction OTP received by the onetime password server 2 is equal to the strength of the transaction OTP (two-way communication method), the received set of ill, transaction OTP (two-way communication method), and transaction contents is stored in the transaction table 6004 of the database 6, and the current time is within a certain duration of time from the transaction contents reception time.
(c) Transaction verification is considered a success if the strength of the transaction OTP received by the onetime password server 2 is equal to the strength of the transaction OTP (one-way communication method), the received set of ID, transaction OTP (one-way communication method), and transaction contents is stored in the transaction table 6004 of the database 6, and the current time is within a certain duration of time from the transaction contents reception time.

In step 1604, the onetime password server 2 deletes the record in the transaction table 6004 of the database 6 that includes the received ID.

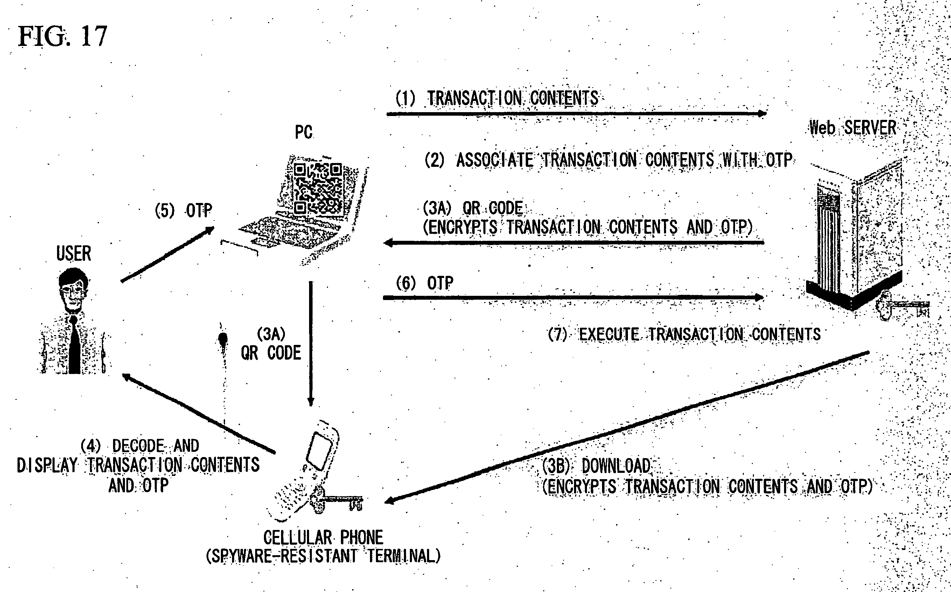

Fig. 17 shows the outline of the procedure starting with the transmission of transaction contents from the information terminal device 3 to the execution of the transaction contents using the transaction OTP.

A process 3A relates to the one-way communication method.

A process 3B relates to the download method.

Process 7 is carried out after confirmation by the onetime password server 2 of successful transaction verification.

In Fig. 17, the Web server corresponds to the online service server 1 and the onetime password server 2; PC corresponds to the information terminal device 3; and the cellular phone corresponds to the portable terminal device 4.

While in the foregoing embodiment the two-dimensional code consists of a QR code, it is also possible to use other two-dimensional codes, such as Maxi code, data matrix, PDF417, and RSS composite, for example.

The invention is also applicable to a PDA in which the information terminal device 3 and the portable terminal device 4 are integrated.

Furthermore, the invention is applicable to the execution of transactions of products advertised on a television receiver via digital television broadcast. In this case, a function equivalent to the information terminal device 3 according to the embodiment may be incorporated in the television receiver, and a function equivalent to the portable terminal device 4 according to the embodiment may be incorporated in the remote controller.

## Claims

1. A verification system comprising:
an online service server (1) for providing online service;
an information terminal device (3) for receiving online service;
a onetime password server (2) for carrying out a process relating to the verification of login of the information terminal device (3) onto the online service server (1) and the verification of transaction contents (1202) of online service using login-verifying onetime passwords and transaction-contents-verifying onetime passwords received from the information terminal device (3); and
a portable terminal device (4) owned by the user of the information terminal device (3) who receives online service, the portable terminal device (4) being used for displaying the onetime passwords used for login verification and transaction contents (1202) verification,
the information terminal device (3) comprising:
means for transmitting a login verification screen (600) acquisition request to the online service server (1), **characterized in that** the information terminal device (3) further comprises:
means for receiving a login verification screen (600) including a challenge generated by the onetime password server (2) in accordance with an instruction from the online service server (1) to the onetime password server (2), displaying the received login verification screen (600), transmitting the received challenge to the portable terminal device (4), and receiving a login-verifying onetime password from the portable terminal device (4) that is generated using the challenge as a factor;
means for transmitting a transaction verification screen (1200) acquisition request including transaction contents (1202) to the online service server (1), receiving a transaction verification screen (1200) to which transaction preparation information is added, wherein the transaction preparation information contains a set of a transaction-contents-verifying onetime password and the transaction contents (1202), said set having been encoded by a common key shared by the onetime password server (2) and the portable terminal device (4), the transaction-contents-verifying onetime password being generated by the onetime password server (2) in accordance with an instruction from the online service server (1) to the onetime password server (2), and displaying the transaction verification screen (1200); and
means for transmitting the transaction preparation information to the portable terminal device (4), and receiving the transaction-contents-verifying onetime password that is extracted by decoding the transaction preparation information in the portable terminal device (4) using the common key shared with the onetime password server (2);
wherein the online service server (1) is adapted to transmit a login verification request comprising the login-verifying onetime password and the challenge to the onetime password server (2); and
wherein the online service server (1) is further adapted to transmit a transaction verification request comprising the transaction-contents-verifying onetime password and the transaction contents to the onetime password server (2).

2. The verification system according to claim 1, wherein the login verification screen (600) is adapted to further include a two-dimensional code of the challenge, and the transaction verification screen (1200) is adapted to further include a two-dimensional code of the transaction preparation information, and wherein the portable terminal device (4) comprises:
means for restoring the challenge by decoding the two-dimensional code of the challenge displayed on a display screen of the information terminal device (3), and displaying a login-verifying onetime password generated using the challenge as a factor; and
means for restoring the transaction preparation information by decoding the two-dimensional code of the transaction preparation information displayed on the display screen of the information terminal device (3), extracting the transaction-contents-verifying onetime password and transaction contents (1202) by decoding the transaction preparation information using the common key, and displaying the transaction-contents-verifying onetime password and transaction contents (1202).

3. The verification system according to claim 1 or 2, wherein the onetime password server (2) comprises:
means for receiving, from the information terminal device (3) via the online service server (1), a login verification request including a login-verifying onetime password and a transaction verification request including a transaction-contents-verifying onetime password, and identifying the type of the received login-verifying onetime password and the transaction-contents-verifying onetime password based on the strength of the login-verifying onetime password and that of the transaction-contents-verifying onetime password.

4. The verification system according to any one of the preceding claims, wherein the information terminal device (3) and the portable terminal device (4) each comprise a wireless interface (307; 411) or an IC card interface (306) for the transmission and reception of the challenge, login-verifying onetime password, transaction preparation information, and transaction-contents-verifying onetime password, using a wireless signal.

5. A verification method in a verification system,
the verification system comprising:
an online service server (1) for providing online service;
an information terminal device (3) for receiving online service;
a onetime password server (2) for carrying out a process relating to the verification of login of the information terminal device (3) onto the online service server (1) and the verification of transaction contents (1202) of online service using login-verifying onetime passwords and transaction-contents-verifying onetime passwords received from the information terminal device (3); and
a portable terminal device (4) owned by the user of the information terminal device (3) who receives online service, the portable terminal device (4) being used for displaying the onetime passwords used for login verification and transaction contents (1202) verification,
the verification method comprising the steps of:
in the information terminal device (3),
transmitting a login verification screen (600) acquisition request to the online service server (1), **characterized in that** the verification method further comprises the steps of:
receiving a login verification screen (600) including a challenge generated by the onetime password server (2) in accordance with an instruction from the online service server (1) to the onetime password server (2),
displaying the received login verification screen (600) on a display,
transmitting the received challenge to the portable terminal device (4), and receiving a login-verifying onetime password from the portable terminal device (4) that is generated using the challenge as a factor;
transmitting a transaction verification screen (1200) acquisition request including transaction contents (1202) to the online service server (1),
receiving a transaction verification screen (1200) to which transaction preparation information is added, wherein the transaction preparation information contains a set of a transaction-contents-verifying onetime password and the transaction contents (1202), said set having been encoded by a common key shared by the onetime password server (2) and the portable terminal device (4), the transaction-contents-verifying onetime password being generated by the onetime password server (2) in accordance with an instruction from the online service server (1) to the onetime password server (2),
displaying the transaction verification screen (1200);
transmitting the transaction preparation information to the portable terminal device (4); and,
receiving the transaction-contents-verifying onetime password that is extracted by decoding the transaction preparation information in the portable terminal device (4) using the common key shared with the onetime password server (2); and
in the online service server (1):
transmitting a login verification request comprising the login-verifying onetime password and the challenge to the onetime password server (2); and
transmitting a transaction verification request comprising the transaction-contents-verifying onetime password and the transaction contents to the onetime password server (2).

6. The verification method according to claim 5, wherein the login verification screen (600) further includes a two-dimensional code of the challenge and the transaction verification screen (1200) further includes a two-dimensional code of the transaction preparation information, and wherein the method further comprises the steps of:
in the portable terminal device (4),
restoring the challenge by decoding the two-dimensional code of the challenge displayed on a display screen of the information terminal device (3),
displaying a login-verifying onetime password generated using the challenge as a factor;
restoring the transaction preparation information by decoding the two-dimensional code of the transaction preparation information displayed on the display screen of the information terminal device (3),
extracting the transaction-contents-verifying onetime password and transaction contents (1202) by decoding the transaction preparation information using the common key; and, displaying the transaction-contents-verifying onetime password and transaction contents (1202) on a display.

## Patentansprüche

1. Verifizierungssystem mit:
einem Onlinedienst-Server (1) zum Bereitstellen eines Onlinedienstes;
einer Informationsterminaleinrichtung(3) zum Empfangen eines Onlinedienstes;
einem Einmalpasswort-Server (2) zum Ausführen eines Prozesses, welcher sich auf die Verifizierung eines Logins der Informationsterminaleinrichtung (3) bei dem Onlinedienst-Server (1) und die Verifizierung von Transaktionsinhalten (1202) des Onlinedienstes unter Verwendung von Einmalpasswörtern für die Loing-Verifizierung und Einmalpasswörtern für die Verifizierung von Transaktionsinhalten, welche von der Informationsterminaleinrichtung (3) empfangen werden, bezieht; und
einer tragbaren Terminaleinrichtung (4), welche dem Nutzer der Informationsterminaleinrichtung (3), welcher den Onlinedienst empfängt, zugeordnet ist, wobei die tragbare Terminaleinrichtung (4) zum Anzeigen der Einmalpasswörter, welche für die Login-Verifizierung und die Verifizierung der Transaktionsinhalte (1202) verwendet werden, eingerichtet ist;
wobei die Informationsterminaleinrichtung (3) Mittel zum Übertragen einer Bezugsanforderung für einen Login-Verifizierungsbildschirm (600) an den Onlinedienst-Server (1) umfasst;
**dadurch gekennzeichnet, dass** die Informationsterminaleinrichtung (3) ferner umfasst:
Mittel zum Empfangen eines Login-Verifizierungsbildschirms (600) mit einer Aufgabe, welche von dem Einmalpasswort-Server (2) gemäß einer Anweisung von dem Onlinedienst-Server (1) an den Einmalpasswort-Server (2) erzeugt wurde, zum Anzeigen des empfangenen Login-Verifizierungsbildschirms (600), zum Übertragen der empfangenen Aufgabe an die tragbare Terminaleinrichtung (4) und zum Empfangen eines Einmalpassworts für die Login-Verifizierung, welches unter Verwendung der Aufgabe als einem Faktor erzeugt wurde, von der tragbaren Terminaleinrichtung (4);
Mittel zum Übertragen einer Bezugsanforderung für einen Transaktionsverifizierungsbildschirm (1200) einschließlich Transaktionsinhalten (1202) an den Onlinedienst-Server (1), zum Empfangen eines Transaktionsverifizierungsbildschirms (1200), dem Transaktionsvorbereitungsinformation hinzugefügt wurde, wobei die Transaktionsvorbereitungsinformation einen Satz eines Einmalpassworts für die Verifizierung der Transaktionsinhalte und die Transaktionsinhalte (1202) umfasst, wobei der Satz mittels eines gemeinsamen Schlüssels, welcher von dem Einmalpasswort-Server (2) und der tragbaren Terminaleinrichtung (4) geteilt wird, verschlüsselt wurde und das Einmalpasswort für die Verifizierung der Transaktionsinhalte durch den Einmalpasswort-Server (2) gemäß einer Instruktion von dem Onlinedienst-Server (1) an den Einmalpasswort-Server (2) erzeugt wurde, und zum Anzeigen des Transaktionsverifizierungsbildschirms (1200); und
Mittel zum Übertragen der Transaktionsvorbereitungsinformation an die tragbare Terminaleinrichtung (4) und zum Empfangen des Einmalpassworts für die Verifizierung der Transaktionsinhalte, welches durch Dekodieren der Transaktionsvorbereitungsinformation in der tragbaren Terminaleinrichtung (4) unter Verwendung des gemeinsamen Schlüssels, welcher mit dem Einmalpasswort-Server (2) geteilt wird, extrahiert wird;
wobei der Onlinedienst-Server (1) dazu eingerichtet ist, eine Login-Verifizierungsanforderung, welche das Einmalpasswort für die Login-Verifizierung und die Aufgabe umfasst, an den Einmalpasswort-Server (2) zu übertragen; und
wobei der Onlinedienst-Server (1) ferner dazu eingerichtet ist, eine Transaktionsverifizierungsanforderung, welche das Einmalpasswort für die Verifizierung der Transaktionsinhalte und die Transaktionsinhalte umfasst, an den Einmalpasswort-Server (2) zu übertragen.

2. Verifizierungssystem nach Anspruch 1, bei welchem der Login-Verifizierungsbildschirm (600) dazu eingerichtet ist, einen zweidimensionalen Code der Aufgabe zu umfassen, und wobei der Transaktionsverifizierungsbildschirm (1200) dazu eingerichtet ist, ferner einen zweidimensionalen Code der Transaktionsvorbereitungsinformation zu umfassen, und wobei die tragbare Terminaleinrichtung (4) umfasst:
Mittel zum Wiederherstellen der Aufgabe durch Dekodieren des zweidimensionalen Codes der Aufgabe, welcher auf einem Anzeigebildschirm der Informationsterminaleinrichtung (3) angezeigt wird, und zum Anzeigen eines Einmalpassworts für die Login-Verifizierung, welches unter Verwendung der Aufgabe als einem Faktor erzeugt wurde; und
Mittel zum Wiederherstellen der Transaktionsvorbereitungsinformation durch Dekodieren des zweidimensionalen Codes der Transaktionsvorbereitungsinformation, welcher auf dem Anzeigebildschirm der Informationsterminaleinrichtung (3) angezeigt wird, zum Extrahieren des Einmalpassworts zur Verifizierung der Transaktionsinhalte und der Transaktionsinhalte (1202) durch Dekodieren der Transaktionsvorbereitungsinformation unter Verwendung des gemeinsamen Schlüssels und zum Anzeigen des Einmalpassworts für die Verifizierung der Transaktionsinhalte und der Transaktionsinhalte (1202).

3. Verifizierungssystem nach Anspruch 1 oder 2, bei welchem der Einmalpasswort-Server (2) umfasst:
Mittel zum Empfangen einer Login-Verifizierungsanforderung einschließlich eines Einmalpassworts für die Login-Verifizierung und einer Transaktionsverifizierungsanforderung, welche ein Einmalpasswort für die Verifizierung der Transaktionsinhalte umfasst, von der Informationsterminaleinrichtung (3) über den Onlinedienst-Server (1) und zum Identifizieren des Typs des empfangenen Einmalpassworts für die Login-Verifizierung und des Einmalpassworts für die Verifizierung der Transaktionsinhalte auf Grundlage der Stärke des Einmalpassworts für die Login-Verifizierung und der Stärke des Einmalpassworts für die Verifizierung der Transaktionsinhalte.

4. Verifizierungssystem nach einem der vorangehenden Ansprüche, bei welchem die Informationsterminaleinrichtung (3) und die tragbare Terminaleinrichtung (4) jeweils eine drahtlose Schnittstelle (307; 411) oder eine Chipcard-Schnittstelle (306) für die Übertragung und den Empfang der Aufgabe, des Einmalpassworts für die Login-Verifizierung, der Transaktionsvorbereitungsinformation und des Einmalpassworts zur Verifizierung der Transaktionsinhalte unter Verwendung eines drahtlosen Signals umfassen.

5. Verifizierungsverfahren in einem Verifizierungssystem, wobei das Verifizierungssystem umfasst:
einen Onlinedienst-Server (1) zum Bereitstellen eines Onlinedienstes;
eine Informationsterminaleinrichtung (3) zum Empfangen eines Onlinedienstes;
einen Einmalpasswort-Server (2) zum Ausführen eines Prozesses, welcher sich auf die Verifizierung eines Logins der Informationsterminaleinrichtung (3) bei dem Onlinedienst-Server (1) und die Verifizierung von Transaktionsinhalten (1202) des Onlinedienstes unter Verwendung von Einmalpasswörtern für die Login-Verifizierung und Einmalpasswörtern für die Verifizierung von Transaktionsinhalten, welche von der Informationsterminaleinrichtung (3) empfangen werden, bezieht; und
eine tragbaren Terminaleinrichtung (4), welche dem Nutzer der Informationsterminaleinrichtung (3), welcher den Onlinedienst empfängt, zugeordnet ist, wobei die tragbare Terminaleinrichtung (4) zum Anzeigen der Einmalpasswörter, welche für die Login-Verifizierung und die Verifizierung der Transaktionsinhalte (1202) verwendet werden, verwendet wird;
wobei das Verifizierungsverfahren die folgenden Schritte umfasst:
an der Informationsterminaleinrichtung (3):
Übertragen einer Bezugsanforderung für einen Login-Verifizierungsbildschirm (600) an den Onlinedienst-Server (1);
**dadurch gekennzeichnet, dass** das Verifizierungsverfahren ferner die nachfolgenden Schritte umfasst:
Empfangen eines Login-Verifizierungsbildschirms (600) einschließlich einer Aufgabe, welche durch den Einmalpasswort-Server (2) gemäß einer Anweisung von dem Onlinedienst-Server (1) an den Einmalpasswort-Server (2) erzeugt wurde;
Anzeigen des empfangenen Login-Verifizierungsbildschirms (600) auf einer Anzeige;
Übertragen der empfangenen Aufgabe an die tragbare Terminaleinrichtung (4) und Empfangen eines Einmalpassworts für die Login-Verifizierung, welches unter Verwendung der Aufgabe als einem Faktor erzeugt wurde, von der tragbaren Terminaleinrichtung (4);
Übertragen einer Bezugsanforderung für einen Transaktionsverifizierungsbildschirm (1200) einschließlich Transaktionsinhalten (1202) an den Onlinedienst-Server (1);
Empfangen eines Transaktionsverifizierungsbildschirms (1200), welchem Transaktionsvorbereitungsinformation hinzugefügt wurde, wobei die Transaktionsvorbereitungsinformation einen Satz eines Einmalpassworts für die Verifizierung der Transaktionsinhalte und die Transaktionsinhalte (1202) umfasst, wobei der Satz mittels eines gemeinsamen Schlüssels, welcher von dem Einmalpasswort-Server (2) und der tragbaren Terminaleinrichtung (4) geteilt wird, verschlüsselt wurde und das Einmalpasswort für die Verifizierung der Transaktionsinhalte von dem Einmalpasswort-Server (2) gemäß einer Instruktion von dem Onlinedienst-Server (1) an den Einmalpasswort-Server (2) erzeugt wurde;
Anzeigen des Transaktionsverifizierungsbildschirms (1200);
Übertragen der Transaktionsvorbereitungsinformation an die tragbare Terminaleinrichtung (4); und
Empfangen des Einmalpassworts für die Verifizierung der Transaktionsinhalte, welches durch Dekodieren der Transaktionsvorbereitungsinformation in der tragbaren Terminaleinrichtung (4) unter Verwendung des gemeinsamen Schlüssels, welcher mit dem Einmalpasswort-Server (2) geteilt wird, extrahiert wird;
an dem Onlinedienst-Server (1):
Übertragen einer Login-Verifizierungsanforderung, welche das Einmalpasswort für die Login-Verifizierung und die Aufgabe umfasst, an den Einmalpasswort-Server (2); und
Übertragen einer Transaktionsverifizierungsanforderung, welche das Einmalpasswort für die Verifizierung der Transaktionsinhalte und die Transaktionsinhalte umfasst, an den Einmalpasswort-Server (2).

6. Verifizierungsverfahren nach Anspruch 5, bei welchem der Login-Verifizierungsbildschirm (600) ferner einen zweidimensionalen Code der Aufgabe umfasst und der Transaktionsverifizierungsbildschirm (1200) ferner einen zweidimensionalen Code der Transaktionsvorbereitungsinformation umfasst, wobei das Verfahren ferner die nachfolgenden Schritte umfasst:
an der tragbaren Terminaleinrichtung (4):
Wiederherstellen der Aufgabe durch Dekodieren des zweidimensionalen Codes der Aufgabe, welcher auf einem Anzeigebildschirm der Informationsterminaleinrichtung (3) angezeigt wird;
Anzeigen eines Einmalpassworts für die Login-Verifizierung, welches unter Verwendung der Aufgabe als einem Faktor erzeugt wird;
Wiederherstellen der Transaktionsvorbereitungsinformation durch Dekodieren des zweidimensionalen Codes der Transaktionsvorbereitungsinformation, welche auf dem Anzeigebildschirm der Informationsterminaleinrichtung (3) angezeigt wird;
Extrahieren des Einmalpassworts für die Verifizierung der Transaktionsinhalte und der Transaktionsinhalte (1202) durch Dekodieren der Transaktionsvorbereitungsinformation unter Verwendung des gemeinsamen Schlüssel; und
Anzeigen des Einmalpassworts für die Verifizierung der Transaktionsinhalte und der Transaktionsinhalte (1202) an einer Anzeigeeinheit.

## Revendications

1. Système de vérification comportant :
un serveur de service en ligne (1) destiné à fournir un service en ligne ;
un dispositif terminal d'information (3) destiné à recevoir un service en ligne ;
un serveur de mots de passe à usage unique (2) destiné à mettre en oeuvre un processus connexe à la vérification de la connexion du dispositif terminal d'information (3) sur le serveur de service en ligne (1) et à la vérification de contenus de transaction (1202) de service en ligne, en utilisant des mots de passe à usage unique de vérification de connexion et
des mots de passe à usage unique de vérification de contenus de transaction reçus à partir du dispositif terminal d'information (3) ; et
un dispositif terminal portable (4) que possède l'utilisateur du dispositif terminal d'information (3) qui reçoit le service en ligne, le dispositif terminal portable (4) étant utilisé en vue d'afficher les mots de passe à usage unique utilisés pour la vérification de connexion et la vérification de contenus de transaction (1202) ;
le dispositif terminal d'information (3) comportant :
un moyen pour transmettre une demande d'acquisition d'écran de vérification de connexion (600) au serveur de service en ligne (1), **caractérisé en ce que** le dispositif terminal d'information (3) comporte en outre :
un moyen pour recevoir un écran de vérification de connexion (600) incluant une demande d'accès générée par le serveur de mots de passe à usage unique (2) selon une instruction du serveur de service en ligne (1) au serveur de mots de passe à usage unique (2), afficher l'écran de vérification de connexion reçu (600), transmettre la demande d'accès reçue au dispositif terminal portable (4), et recevoir un mot de passe à usage unique de vérification de connexion à partir du dispositif terminal portable (4), lequel est généré en utilisant la demande d'accès en qualité de facteur ;
un moyen pour transmettre une demande d'acquisition d'écran de vérification de transaction (1200), incluant des contenus de transaction (1202), au serveur de service en ligne (1), recevoir un écran de vérification de transaction (1200) auquel des informations de préparation de transaction sont ajoutées, dans lequel les informations de préparation de transaction contiennent un ensemble constitué d'un mot de passe à usage unique de vérification de contenus de transaction et des contenus de transaction (1202), ledit ensemble ayant été codé par une clé commune partagée par le serveur de mots de passe à usage unique (2) et le dispositif terminal portable (4), le mot de passe à usage unique de vérification de contenus de transaction étant généré par le serveur de mots de passe à usage unique (2) selon une instruction du serveur de service en ligne (1) au serveur de mots de passe à usage unique (2), et afficher l'écran de vérification de transaction (1200) ; et
un moyen pour transmettre les informations de préparation de transaction au dispositif terminal portable (4), et recevoir le mot de passe à usage unique de vérification de contenus de transaction qui est extrait en décodant les informations de préparation de transaction incluses dans le dispositif terminal portable (4), au moyen de la clé commune partagée avec le serveur de mots de passe à usage unique (2) ;
dans lequel le serveur de service en ligne (1) est apte à transmettre une demande de vérification de connexion comportant le mot de passe à usage unique de vérification de connexion et la demande d'accès au serveur de mots de passe à usage unique (2) ; et
dans lequel le serveur de service en ligne (1) est en outre apte à transmettre une demande de vérification de transaction comportant le mot de passe à usage unique de vérification de contenus de transaction et les contenus de transaction au serveur de mots de passe à usage unique (2).

2. Système de vérification selon la revendication 1, dans lequel l'écran de vérification de connexion (600) est apte à inclure en outre un code dimensionnel de la demande d'accès, et l'écran de vérification de transaction (1200) est apte à inclure en outre un code dimensionnel des informations de préparation de transaction, et dans lequel le dispositif terminal portable (4) comporte :
un moyen pour restaurer la demande d'accès en décodant le code dimensionnel de la demande d'accès affiché sur un écran d'affichage du dispositif terminal d'information (3), et afficher un mot de passe à usage unique de vérification de connexion généré en utilisant la demande d'accès en qualité de facteur ;
et un moyen pour restaurer les informations de préparation de transaction en décodant le code dimensionnel des informations de préparation de transaction affiché sur l'écran d'affichage du dispositif terminal d'information (3), extraire le mot de passe à usage unique de vérification de contenus de transaction et les contenus de transaction (1202) en décodant les informations de préparation de transaction au moyen de la clé commune, et afficher le mot de passe à usage unique de vérification de contenus de transaction et les contenus de transaction (1202).

3. Système de vérification selon la revendication 1 ou 2, dans lequel le serveur de mots de passe à usage unique (2) comporte :
un moyen pour recevoir, à partir du dispositif terminal d'information (3) par l'intermédiaire du serveur de service en ligne (1), une demande de vérification de connexion incluant un mot de passe à usage unique de vérification de connexion, et une demande de vérification de transaction incluant un mot de passe à usage unique de vérification de contenus de transaction, et identifier le type du mot de passe à usage unique de vérification de connexion reçu et du mot de passe à usage unique de vérification de contenus de transaction sur la base de la force du mot de passe à usage unique de vérification de connexion et de la force du mot de passe à usage unique de vérification de contenus de transaction.

4. Système de vérification selon l'une quelconque des revendications précédentes, dans lequel le dispositif terminal d'information (3) et le dispositif terminal portable (4) comportent chacun une interface sans fil (307 ; 411) ou une interface de carte de circuit IC (306) pour la transmission et la réception de la demande d'accès, du mot de passe à usage unique de vérification de connexion, des informations de préparation de transaction, et du mot de passe à usage unique de vérification de contenus de transaction, au moyen d'un signal sans fil.

5. Procédé de vérification dans un système de vérification,
le système de vérification comportant :
un serveur de service en ligne (1) destiné à fournir un service en ligne ;
un dispositif terminal d'information (3) destiné à recevoir un service en ligne ;
un serveur de mots de passe à usage unique (2) destiné à mettre en oeuvre un processus connexe à la vérification de la connexion du dispositif terminal d'information (3) sur le serveur de service en ligne (1) et à la vérification de contenus de transaction (1202) de service en ligne, en utilisant des mots de passe à usage unique de vérification de connexion et des mots de passe à usage unique de vérification de contenus de transaction reçus à partir du dispositif terminal d'information (3) ; et
un dispositif terminal portable (4) que possède l'utilisateur du dispositif terminal d'information (3) qui reçoit le service en ligne, le dispositif terminal portable (4) étant utilisé en vue d'afficher les mots de passe à usage unique utilisés pour la vérification de connexion et la vérification de contenus de transaction (1202) ;
le procédé de vérification comportant l'étape ci-dessous consistant à :
dans le dispositif terminal d'information (3) :
transmettre une demande d'acquisition d'écran de vérification de connexion (600) au serveur de service en ligne (1), **caractérisé en ce que** le procédé de vérification comporte en outre les étapes ci-après consistant à : recevoir un écran de vérification de connexion (600) incluant une demande d'accès générée par le serveur de mots de passe à usage unique (2) selon une instruction du serveur de service en ligne (1) au serveur de mots de passe à usage unique (2) ;
afficher l'écran de vérification de connexion reçu (600) sur un écran d'affichage ;
transmettre la demande d'accès reçue au dispositif terminal portable (4) ; et recevoir un mot de passe à usage unique de vérification de connexion à partir du dispositif terminal portable (4), lequel est généré en utilisant la demande d'accès en qualité de facteur ;
transmettre une demande d'acquisition d'écran de vérification de transaction (1200) incluant des contenus de transaction (1202) au serveur de service en ligne (1) ;
recevoir un écran de vérification de transaction (1200) auquel des informations de préparation de transaction sont ajoutées, dans lequel les informations de préparation de transaction contiennent un ensemble constitué d'un mot de passe à usage unique de vérification de contenus de transaction et des contenus de transaction (1202), ledit ensemble ayant été codé par une clé commune partagée par le serveur de mots de passe à usage unique (2) et le dispositif terminal portable (4), le mot de passe à usage unique de vérification de contenus de transaction étant généré par le serveur de mots de passe à usage unique (2) selon une instruction du serveur de service en ligne (1) au serveur de mots de passe à usage unique (2) ;
afficher l'écran de vérification de transaction (1200) ;
transmettre les informations de préparation de transaction au dispositif terminal portable (4) ; et,
recevoir le mot de passe à usage unique de vérification de contenus de transaction qui est extrait en décodant les informations de préparation de transaction incluses dans le dispositif terminal portable (4), au moyen de la clé commune partagée avec le serveur de mots de passe à usage unique (2) ; et
dans le serveur de service en ligne (1) :
transmettre une demande de vérification de connexion comportant le mot de passe à usage unique de vérification de connexion et la demande d'accès au serveur de mots de passe à usage unique (2) ; et transmettre une demande de vérification de transaction comportant le mot de passe à usage unique de vérification de contenus de transaction et les contenus de transaction au serveur de mots de passe à usage unique (2).

6. Procédé de vérification selon la revendication 5, dans lequel l'écran de vérification de connexion (600) inclut en outre un code dimensionnel de la demande d'accès, et l'écran de vérification de transaction (1200) inclut en outre un code dimensionnel des informations de préparation de transaction, et dans lequel le procédé comporte en outre les étapes ci-après consistant à :
dans le dispositif terminal portable (4) :
restaurer la demande d'accès en décodant le code dimensionnel de la demande d'accès affiché sur un écran d'affichage du dispositif terminal d'information (3) ;
afficher un mot de passe à usage unique de vérification de connexion généré en utilisant la demande d'accès en qualité de facteur ;
restaurer les informations de préparation de transaction en décodant le code dimensionnel des informations de préparation de transaction affiché sur l'écran d'affichage du dispositif terminal d'information (3) ;
extraire le mot de passe à usage unique de vérification de contenus de transaction et les contenus de transaction (1202) en décodant les informations de préparation de transaction au moyen de la clé commune ; et
afficher le mot de passe à usage unique de vérification de contenus de transaction et les contenus de transaction (1202) sur un écran d'affichage.
